# EUROPÄISCHE PATENTSCHRIFT

(11) **EP 4 295 425 B1**
(45) Veröffentlichungstag und Bekanntmachung des Hinweises auf die Patenterteilung: **16.10.2024**
(21) Anmeldenummer: 21761984.0
(22) Anmeldetag: 03.08.2021
(51) Int. Cl.: H01M 8/0202, H01M 8/0213, H01M 8/0271, H01M 8/0284, H01M 8/0297

(54) **VERFAHREN ZUM FERTIGEN EINER GRAPHITISCHEN BIPOLARPLATTE DURCH VERKLEBEN VON MONOPOLARPLATTEN SOWIE BIPOLARPLATTE UND BRENNSTOFFZELLE BZW. FLUSSBATTERIE MIT DERSELBEN**
PROCESS FOR MANUFACTURING A GRAPHITE BIPOLAR PLATE BY ADHESIVELY BONDING MONOPOLAR PLATES, AND BIPOLAR PLATE AND FUELL CELL OR REDOX FLOW BATTERY COMPRISING SAME
PROCÉDÉ DE FABRICATION D'UNE PLAQUE BIPOLAIRE EN GRAPHITE PAR COLLAGE DE PLAQUES MONOPOLAIRE ET PLAQUE BIPOLAIRE ET PILE À COMBUSTIBLE OU BATTERIE À FLUX REDOX LA COMPRENANT

(43) Veröffentlichungstag der Anmeldung: 27.12.2023
(73) Patentinhaber: Schunk Kohlenstofftechnik GmbH, 35452 Heuchelheim (DE)
(72) Erfinder: VOORMANN, Hauke, 35440 Linden (DE); WITTKA, Dominik, 35649 Bischoffen (DE)
(74) Vertreter: Qip Patentanwälte Dr. Kuehn & Partner mbB
(86) Internationale Anmeldenummer: PCT/EP2021/071691
(87) Internationale Veröffentlichungsnummer: WO 2023/011710

(56) Entgegenhaltungen:
- EP-A1- 3 666 843
- EP-A2- 2 693 550
- WO-A1-2009/051980
- WO-A1-2012/067270
- WO-A1-2022/129533
- CN-A- 108 365 234
- DE-A1- 10 251 775
- DE-A1- 102012 019 677
- US-A1- 2005 031 933

## Beschreibung

### GEBIET DER ERFINDUNG

Die vorliegende Erfindung betrifft ein Verfahren zum Fertigen einer graphitischen Bipolarplatte, wie sie beispielsweise in einer Brennstoffzelle oder einer Flussbatterie eingesetzt werden kann. Ferner betrifft die Erfindung eine Bipolarplatte sowie eine Energiespeicheranordnung mit einer solchen Bipolarplatte.

### HINTERGRUND DER ERFINDUNG

Bipolarplatten sollen in Brennstoffzellen, die zu Stapeln geschichtet einen Kern eines Brennstoffzellensystems bilden, mehrere verschiedene Aufgaben erfüllen. Einerseits sollen sie benachbarte Brennstoffzellen miteinander verbinden, d.h. eine Anode einer Zelle mit einer Kathode einer benachbarten Zelle physikalisch und elektrisch leitend verbinden. Andererseits soll über eine Fläche der Bipolarplatte eine Gasverteilung hin zu Reaktionsräumen innerhalb der Brennstoffzellen erfolgen können, das heißt die Bipolarplatte soll Reaktionsgase in Reaktionszonen leiten.

Die Bipolarplatte weist hierzu typischerweise auf beiden Seiten Strömungsprofile (sogenannte Flowfields) auf, die urgeformt und/oder umgeformt, d.h. zum Beispiel gefräst oder eingepresst, sein können und durch die auf der einen Seite Wasserstoff strömt und auf der anderen Seite Luft bzw. Sauerstoff zugeführt wird. Die Bipolarplatte regelt hierbei im Allgemeinen auch eine Abfuhr von Wasserdampf beziehungsweise Abgabe von thermischer und elektrischer Energie. Außerdem soll die Bipolarplatte ferner für eine Gastrennung zwischen angrenzenden Zellen, für eine Dichtung nach außen und gegebenenfalls für eine Kühlung sorgen.

Um den an sie gestellten Anforderungen gerecht werden zu können, weist eine Bipolarplatte im Allgemeinen eine innenliegende Struktur aus Kanälen auf, durch die Reaktionsgase zugeleitet bzw. abgeleitet werden können. Um eine solche innenliegende Kanalstruktur fertigungstechnisch ausbilden zu können, wird die Bipolarplatte meist aus zwei separaten Monopolarplatten zusammengesetzt. An den Oberflächen einer oder beider der Monopolarplatten, die in dem zu der Bipolarplatte zusammengesetzten Zustand zueinander gerichtet sind, können hierbei die gewünschten Kanalstrukturen problemlos beispielsweise in Form länglicher Vertiefungen ausgebildet werden, beispielsweise durch Urformen oder Umformen. Anschließend können die beiden Monopolarplatten mechanisch miteinander verbunden werden, sodass sich zwischen ihnen aufgrund der in den einzelnen Monopolarplatten gebildeten Kanalstrukturen insgesamt die gewünschten innenliegende Kanäle bilden.

Um ferner weiteren an sie gestellten Anforderungen gerecht werden zu können, wurde erkannt, das Bipolarplatten vorteilhaft aus einem graphitischen Werkstoff gebildet sein können. Ein solcher graphitischer Werkstoff kann beispielsweise aus einer Vielzahl kleiner Graphitpartikel bestehen, die in einer Matrix beispielsweise aus einem Polymermaterial eingelagert sind und/oder miteinander verpresst sind. Der graphitische Werkstoff weist hierbei vorteilhafte Eigenschaften für die Bipolarplatte auf, wie unter anderem eine hohe elektrische Leitfähigkeit, eine hohe thermische Leitfähigkeit, gute chemische Resistenz gegenüber den typischerweise in einer Brennstoffzelle einzusetzenden Chemikalien, ausreichend hohe mechanische Belastbarkeit, etc.

Allerdings wurde erkannt, dass das mechanische Verbinden zweier graphitischer Monopolarplatten zu einer Bipolarplatte insbesondere angesichts der an die Bipolarplatte bei deren Einsatz in der Brennstoffzelle herrschenden Anforderungen keine triviale Aufgabe darstellt. Die Verbindung zwischen den beiden Monopolarplatten soll beispielsweise ausreichend mechanisch fest sein, thermisch und chemisch den Gegebenheiten in der Brennstoffzelle standhalten können, einerseits die beiden Monopolarplatten ausreichend dicht miteinander verbinden, sodass zum Beispiel keine Prozessgase an unerwünschten Stellen austreten können, andererseits eine ausreichende Gasdurchlässigkeit beispielsweise für Sauerstoff aufweisen, um chemische Prozesse innerhalb der Brennstoffzelle nicht zu behindern, etc. Außerdem sollte die mechanische Verbindung zweier Monopolarplatten beim Fertigen der Bipolarplatte prozesstechnisch einfach, zuverlässig und/oder kostengünstig umsetzbar sein.

Herkömmlich werden graphitische Monopolarplatten oft miteinander verklebt, um sie mechanisch zu Bipolarplatten zu verbinden. Hierzu werden Klebstoff auf Basis von 2K-Epoxidharz (d.h. 2-Komponenten-Epoxidharz), Cyan-Acrylate oder Silikonpolymere eingesetzt.

Während die Bipolarplatten, die auf herkömmliche Weise verklebt wurden, den im Einsatz der Brennstoffzelle herrschenden Anforderungen meist ausreichend gerecht werden können, wurde erkannt, dass insbesondere deren Fertigung nachteilbehaftet sein kann.

EP 3 666 843 A1 beschreibt einen einkomponentigen Klebstoff und einen Brennstoffzellenseparator. DE 102 51 775 A1 beschreibt ein Verfahren zum Fügen von Plattenelementen einer Brennstoffzelleneinheit. DE 10 2012 019 677 A1 beschreibt eine Montage von Bipolarplatten für Brennstoffzellen mittels mikroverkapselter Klebstoffe. CN 108365234 beschreibt ein Verfahren zum Bonden von Brennstoffzellen-Bipolarplatten.

### ZUSAMMENFASSUNG DER ERFINDUNG UND VORTEILHAFTER AUSFÜHRUNGSFORMEN

Es kann ein somit Bedarf an einem verbesserten Verfahren zum Fertigen einer graphitischen Bipolarplatte bestehen. Insbesondere kann ein Bedarf an einem Verfahren bestehen, mit dem eine Bipolarplatte gefertigt werden kann, welche einerseits den im Einsatz einer Brennstoffzelle bzw. Flussbatterie herrschenden Anforderungen gerecht wird, und welches andererseits prozesstechnisch einfach, zuverlässig und/oder kostengünstig umsetzbar ist. Außerdem kann ein Bedarf an einer entsprechend herstellbaren Bipolarplatte sowie einer damit ausgestatteten Energiespeicheranordnung in Form einer Brennstoffzelle oder einer Flussbatterie bestehen.

Einem solchen Bedarf kann mit dem Gegenstand der unabhängigen Ansprüche entsprochen werden. Vorteilhafte Ausführungsformen sind in den abhängigen Ansprüchen definiert sowie in der nachfolgenden Beschreibung beschrieben und in den Figuren dargestellt.

Ein erster Aspekt der Erfindung betrifft ein Verfahren zum Fertigen einer graphitischen Bipolarplatte für eine Brennstoffzelle oder eine Flussbatterie, wobei das Verfahren folgende Prozessschritte umfasst: (i) Bereitstellen eines Paars von graphitischen Monopolarplatten, und (ii) Verkleben der Monopolarplatten entlang einander gegenüberliegender Kontaktflächen der Monopolarplatten. Zum Verkleben wird hierbei ein 1K-Epoxidharz eingesetzt, welches dazu angepasst ist, eine Aktivierungstemperatur von wenigstens 50°C aufzuweisen, indem als Härter aromatische Amine, welche als Feststoffhärter fungieren, eingesetzt werden.

Ein zweiter Aspekt der Erfindung betrifft eine Bipolarplatte für eine Brennstoffzelle oder eine Flussbatterie, wobei die Bipolarplatte ein Paar von graphitischen Monopolarplatten aufweist, welche mittels eines 1K-Epoxidharzes entlang einander gegenüberliegender Kontaktflächen miteinander verklebt sind, wobei das 1K-Epoxidharz dazu angepasst ist, eine Aktivierungstemperatur von wenigstens 50°C aufzuweisen, indem als Härter aromatische Amine, welche als Feststoffhärter fungieren, eingesetzt werden.

Ein dritter Aspekt der Erfindung betrifft eine Energiespeicheranordnung, insbesondere mit wenigstens einer Brennstoffzelle oder Flussbatterie, mit einer Bipolarplatte gemäß einer Ausführungsform des zweiten Aspekts der Erfindung.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Kurz und grob zusammengefasst kann ein Grundgedanke zu der hierin beschriebenen Idee darin gesehen werden, dass überraschenderweise beobachtet wurde, dass graphitische Bipolarplatten entgegen bisher bestehender Vorurteile vorteilhaft mithilfe von Klebstoffen auf Basis von 1K-Epoxidharz (d.h. 1-Komponenten-Epoxidharz) in einer für die Anwendung in Brennstoffzellen bzw. Flussbatterien geeigneten Weise verklebt werden können. Es wurde erkannt, dass für den Fall, dass 1K-Epoxidharz geeignet an die Gegebenheiten angepasst wird, wie sie einerseits beim Fertigen der Bipolarplatte herrschen und wie sie andererseits im späteren Einsatz der Bipolarplatte herrschen, überraschenderweise das Verkleben der Monopolarplatten mittels solch speziell angepasstem 1K-Epoxidharz einem Verkleben mit herkömmlich hierfür eingesetzten Klebstoffen in vieler Hinsicht überlegen sein kann. Das 1K-Epoxidharz kann dabei sowohl dazu angepasst sein, die beiden Monopolarplatten ausreichend mechanisch belastbar miteinander zu einer Bipolarplatte zu verbinden, als auch, um als Dichtmittel zu dienen, um Bereiche innerhalb der Bipolarplatte oder hin zu einer Umgebung der Bipolarplatte geeignet abzudichten. Hierzu sollen Eigenschaften des 1K-Epoxidharzes insbesondere derart angepasst sein, dass dieses für einen Betrieb z.B. innerhalb einer Brennstoffzelle ausreichend chemisch beständig, gasdicht und mechanisch beanspruchbar ist.

Nachfolgend werden mögliche Details zu Ausgestaltungen der hierin vorgeschlagenen Verfahren und Produkte erläutert.

Wie einleitend bereits angedeutet, können Bipolarplatten aus einem graphitischen Werkstoff signifikante Vorteile beim Einsatz in Brennstoffzellen oder Flussbatterien bewirken.

Graphit bietet als kohlenstoffhaltiges Material für viele Anwendungszwecke vorteilhafte Eigenschaften. Für die Verwendung beispielsweise in Bipolarplatten bietet Graphit eine sehr hohe elektrische Leitfähigkeit zusammen mit einer hohen thermischen Belastbarkeit und Leitfähigkeit sowie einer ausreichend hohen mechanischen Festigkeit. Zur Bildung von Bipolarplatten werden unter anderem graphithaltige Werkstoffe eingesetzt, bei denen Graphitpartikel in einer Polymermatrix eingebettet sind. Die Graphitpartikel geben dem Werkstoff gewünschte elektrische und/oder thermische und/oder mechanische Eigenschaften. Die Polymermatrix dient unter anderem dazu, die Graphitpartikel mechanisch zusammen zu halten und die Last im Bauteil zu übertragen. Die Polymermatrix kann beispielsweise ein Epoxidharz enthalten. Die Graphitpartikel wirken somit als Füllstoff und die Polymermatrix als eine Art Bindemittel. In dem Werkstoffgemisch können neben Graphitpartikeln und Polymeren noch weitere Bestandteile enthalten sein, beispielsweise in Form von Ruß, weiteren Bindemitteln oder ähnlichem. Vorteilhafterweise kann der graphithaltige Werkstoff einen Graphitanteil von mindestens 60 %, vorzugsweise mindestens 70 % oder sogar mindestens 80 %, aufweisen. Die Prozentangaben können sich hierbei auf das Volumen beziehen. Aufgrund des hohen Graphitanteils kann der Werkstoff unter anderem eine sehr gute elektrische Leitfähigkeit bieten, wie sie insbesondere bei einer Verwendung zur Ausbildung von Bipolarplatten vorteilhaft ist. Beispiele und mögliche Eigenschaften von graphithaltigen Werkstoffen sind unter anderem in der früheren Patentanmeldung PCT/EP2020/078489 der Anmelderin beschrieben. Die dort beschriebenen graphithaltigen Werkstoffe können in Ausführungsformen des hierin beschriebenen Verfahrens für die Monopolarplatten eingesetzt werden. Der Inhalt der früheren Patentanmeldung wird hierin durch Inbezugnahme vollumfänglich aufgenommen.

Um die Bipolarplatte aus zwei Monopolarplatten zusammenzusetzen und dabei die Monopolarplatten mechanisch miteinander zu verbinden, werden bisher Klebstoffe verwendet, die aufgrund ihrer bekannten Eigenschaften prädestiniert für eine solche Aufgabe erscheinen. Unter anderem werden mechanisch ausreichend belastbare Klebstoffe auf Basis von 2K-Epoxidharz, Cyan-Acrylat oder Silikonpolymeren verwendet. Solche Klebstoffsysteme können zum Beispiel thermisch, hygroskopisch oder mittels UV-Strahlung aktiviert werden.

2K-Epoxidharz wird hierbei kurz vor der Verarbeitung aus zwei Komponenten zusammengemischt. Die beiden Komponenten reagieren dann chemisch miteinander, wodurch der Klebstoff aushärtet. 2K-Epoxidharz ist als Klebstoff dafür bekannt, definiert verarbeitet werden zu können und nach dem Aushärten eine sehr hohe Festigkeit zu erreichen. Ergänzend erscheint 2K-Epoxidharz aufgrund seiner chemischen Eigenschaften geeignet zu sein für den Einsatz als Klebstoff zum Verbinden von Monopolarplatten. Ähnliches gilt für Klebstoff auf Basis von Cyan-Acrylat oder Silikonpolymeren.

Allerdings wurde beobachtet, dass die genannten herkömmlich verwendeten Klebstoffe oft mit Nachteilen hinsichtlich ihrer Verarbeitbarkeit einher kommen. Beispielsweise weisen solche Klebstoffe oft eine geringe Topfzeit auf, sodass sie nur kurz gelagert werden können und schnell verarbeitet werden müssen. Außerdem können Aushärtungsdauern solcher Klebstoffe verhältnismäßig lang sein. Beim Verarbeiten der herkömmlich verwendeten Klebstoffe sind im Allgemeinen enge Prozessfenster einzuhalten und es kann sich eine geringe Prozessfähigkeit ergeben. Es kann unter anderem dadurch, dass bei der chemischen Reaktion der beiden Komponenten in dem Klebstoff erhebliche Mengen an thermischer Energie freigesetzt werden, einen starkes Erhitzen des Klebstoffes erfolgen, was beispielsweise bei einem versehentlichen Zusammenmischen übermäßiger Mengen von Klebstoff zu einer Überhitzung oder sogar Brandgefahr führen kann. Außerdem weisen die genannten Klebstoffe oft eine geringe Viskosität und somit eine schlechte Standfestigkeit auf. Ferner kann eine Applikationsfähigkeit solcher Klebstoffe schlecht sein. Manche der genannten Klebstoffe enthalten sogar Katalysatorgifte, beispielsweise als Füllstoffe, welche Katalysatoren, die z.B. in Brennstoffzellen zum Einsatz kommen, schädigen können. Manche der genannten Klebstoffe weisen auch eine niedrige Endfestigkeit, insbesondere eine unzureichende Kohäsion und/oder Adhäsion auf. Die Verwendung der bisher genutzten Klebstoffe kann daher mit hohen Prozesskosten einhergehen und/oder eine aufwändige Prozessinfrastruktur, d.h. beispielsweise eine genau einzuhaltende Lagertemperatur und/oder Verarbeitungstemperatur, Vermeidung von Tageslicht, etc., erfordern.

Prinzipiell sind Klebstoffe auf Basis von 1K-Epoxidharz seit langem bekannt. Bei einem 1K-Epoxidharz werden alle Bestandteile bereits vor der Applikation gemischt und in ein einzelnes Gebinde abgefüllt. Dieses Gemisch ist bei Raumtemperatur chemisch inaktiv oder vernetzt nur sehr langsam (latent). Daher erfolgt eine Aktivierung nicht durch das Zusammenmischen mit einer weiteren Komponente. Stattdessen erfolgt die Aktivierung durch Einbringen einer Aktivierungsenergie. Die Aktivierungsenergie wird typischerweise thermisch eingebracht, d.h. durch Wärmezufuhr. Abhängig von der genauen chemischen Zusammensetzung des 1K-Epoxidharzes muss dieses dabei im Allgemeinen bis über eine Aktivierungstemperatur erhitzt werden. Oberhalb dieser Aktivierungstemperatur setzt eine typischerweise exotherme chemische Reaktion ein, die einerseits zum Aushärten des Klebstoffes und andererseits zum Freisetzen weiterer thermischer Energie führt.

Bisher war als lange gehegtes Vorurteil davon ausgegangen worden, dass Klebstoffe auf Basis von 1K-Epoxidharz zwar gewisse Vorteile hinsichtlich beispielsweise ihrer Verarbeitbarkeit aufweisen, dass diese aber aufgrund einiger anderer Eigenschaften nur für bestimmte Einsatzzwecke geeignet erscheinen. Beispielsweise werden solche Klebstoffe im Fahrzeugbau dazu eingesetzt, um Bauteile über erhebliche Spaltbreiten von zum Beispiel mehr als 1mm hinweg miteinander zu verkleben. Bei solchen Klebevorgängen müssen die vorherrschenden Temperaturen meist aufgrund der Materialien der zu verklebenden Bauteile relativ gering bleiben, was bei herkömmlichen 1K-Epoxidharzen aufgrund ihrer typischerweise langsamen exothermen Reaktion gewährleistet werden kann. Dabei wird in der Regel in Kauf genommen, dass der Klebstoff relativ lange zum Aushärten benötigt.

Insbesondere wurde bisher davon ausgegangen, dass Klebstoffe auf Basis von 1K-Epoxidharz keine für das Verkleben von Monopolarplatten zu einer Bipolarplatte geeigneten oder sogar vorteilhaften Eigenschaften aufweist. Stattdessen war angenommen worden, dass das typischerweise langsam erfolgende Aushärten solcher Klebstoffe bei der Fertigung von Bipolarplatten erhebliche Nachteile bewirkt.

Entgegen solcher Vorteile wurde nun erkannt, dass Klebstoffe auf Basis von 1K-Epoxidharz bei geeigneter Anpassung ihrer chemischen Zusammensetzung und somit ihrer physikalischen Eigenschaften und/oder bei geeigneter Anpassung von Prozessparametern bei ihrer Verarbeitung durchaus geeignet und sogar vorteilhaft zum Verkleben von Monopolarplatten eingesetzt werden können. Insbesondere wurde erkannt, dass solche Klebstoffe sehr gut geeignet sein können, um Monopolarplatten auf Basis von graphithaltigem Werkstoff miteinander zu verkleben, da diese physikalische Eigenschaften aufweisen, die bei einem solchen Verkleben vorteilhaft genutzt werden können.

Insbesondere wurde erkannt, dass 1K-Epoxidharz in seiner chemischen Zusammensetzung derart angepasst werden kann, dass es relativ hohen Temperaturen standhält. Bei solch hohen Temperaturen kann das 1K-Epoxidharz verhältnismäßig schnell reagieren und somit aushärten. Allerdings war bisher davon ausgegangen worden, dass 1K-Epoxidharz nicht übermäßig erhitzt werden sollte, da ansonsten aufgrund der dann verstärkt ablaufenden exothermen Reaktion meist ein sehr schnell stattfindender weiterer Temperaturanstieg innerhalb des Harzes auftritt, wobei bei herkömmlichen Anwendungsfällen Temperaturen von mehreren Hunderten Grad Celsius erreicht werden können, was im Regelfall zu einer thermischen Schädigung des Harzes führt.

Bei dem hierin beschriebenen Anwendungsfall des Verklebens von Monopolarplatten können jedoch, wie weiter unten genauer beschrieben, die physikalischen Eigenschaften, insbesondere die thermischen Eigenschaften, dieser Monopolarplatten dahingehend vorteilhaft genutzt werden, dass thermische Energie schnell abgeleitet werden kann, um einer übermäßigen Erhitzung des Harzes vorzubeugen.

Gemäß einer Ausführungsform ist das 1K-Epoxidharz dazu angepasst, Temperaturen bis zu einer Grenztemperatur von wenigstens 200°C schädigungsfrei standzuhalten. Ferner wird das 1K-Epoxidharz während des Verklebens auf wenigstens 200°C erhitzt. Tatsächlich sind Klebstoffe auf Basis von 1K-Epoxidharz typischerweise bisher nicht dazu ausgelegt, hohen Temperaturen zu widerstehen. Stattdessen ist die Zusammensetzung herkömmlicher 1K-Epoxidharze meist hinsichtlich anderer Eigenschaften des Klebstoffs optimiert, was dazu führt, dass das Harz oft schon bei Temperaturen von weniger als 180 °C, häufig sogar weniger als 160 °C, beginnt, aufgrund thermischer Schädigungen zu degradieren. Dies kann jedoch bei vielen bisherigen Einsatzfeldern von 1K-Epoxidharzen von untergeordneter Relevanz sein, da dort bereits aus anderen Gründen höhere Temperaturen zu vermeiden sind.

Für die hierin beschriebene Verwendung von 1K-Epoxidharz zum Verkleben von Monopolarplatten können höhere Temperaturen jedoch akzeptabel sein, insbesondere weil die graphitischen Monopolarplatten problemlos hohen Temperaturen standhalten. Dementsprechend wurde es als vorteilhaft erkannt, die Zusammensetzung des 1K-Epoxidharzes dahingehend zu modifizieren, dass dieses auch höheren Temperaturen widersteht, ohne signifikant thermisch zu degradieren. Insbesondere soll die Zusammensetzung des Harzes derart angepasst sein, dass dieses Temperaturen bis hin zu einer Grenztemperatur schädigungsfrei standhält. Diese Grenztemperatur sollte vorzugsweise wenigstens 200 °C, stärker bevorzugt wenigstens 210 °C oder sogar wenigstens 220 °C betragen. Die thermische Widerstandsfähigkeit des Epoxidharzes kann hierbei auf unterschiedliche Weise beeinflusst werden. Erfindungsgemäß werden als Härter aromatische Amine verwendet, da diese als Feststoffhärter fungieren und, da sie aufschmelzen, sehr latent sind. Auch eine Verwendung von Katalysatoren wie beispielsweise tertiären Aminen, Lewis Säure und Basen, Dicyandiaminen, Polyolen (z.B. Phenolen) oder Dimethylaminomethylphenol und/oder von Beschleunigern wie z.B. Urea und Imidazol kann das Temperaturverhalten des Epoxidharzes beeinflussen.

Während des Verklebens kann dann dafür gesorgt werden, dass das 1K-Epoxidharz auf eine Temperatur von wenigstens 200 °C, vorzugsweise wenigstens 210 °C oder sogar wenigstens 220 °C, erhitzt wird. Hierzu können beispielsweise eine oder vorzugsweise beide der Monopolarplatten entsprechend erhitzt werden, sodass indirekt das zwischen diesen Monopolarplatten befindliche Harz erhitzt wird. Durch dieses Erhitzen kann das Harz über seine Aktivierungstemperatur gebracht werden, sodass die zum Aushärten führenden chemischen Reaktionen ausgelöst werden. Da diese chemischen Reaktionen bei hohen Temperaturen deutlich schneller ablaufen als bei niedrigeren, kann durch die beschriebene Erhöhung der Prozesstemperatur bewirkt werden, dass ein Aushärtungsvorgang deutlich schneller abläuft, als dies herkömmlich beim Aushärten konventioneller 1K-Epoxidharze bei typischerweise niedrigeren Temperaturen der Fall ist.

Allerdings sollte vermieden werden, dass das 1K-Epoxidharz während des Aushärtens aufgrund der darin erfolgenden exothermen Reaktionen übermäßig heiß wird. Insbesondere sollte vermieden werden, dass die Temperatur innerhalb des 1K-Epoxidharzes die Grenztemperatur, bei der irreversible Schädigungen auftreten können, übersteigt.

Gemäß einer konkretisierten Ausführungsform können hierzu die Monopolarplatten während des Verklebens auf eine Temperatur unterhalb der Grenztemperatur des 1K-Epoxidharzes temperiert werden.

Mit anderen Worten können die Monopolarplatten nicht nur dazu eingesetzt werden, dass Epoxidharz anfänglich auf seine Aktivierungstemperatur oder darüber hinaus zu erhitzen, sondern auch dazu, überschüssige thermische Energie aus dem Epoxidharz abzuleiten. Da die graphitischen Monopolarplatten typischerweise ein sehr gutes Wärmeleitverhalten aufweisen, kann mit ihrer Hilfe thermische Energie schnell und effizient aus dem angrenzenden 1K-Epoxidharz abgeleitet werden, insbesondere solange die Schichtdicke der Klebeschicht weniger als 200µm, vorzugsweise weniger als 150µm beträgt und sich die Menge an aufgebrachtem Klebstoff unter 0,4g/m² ist. Insbesondere können die Monopolarplatten derart temperiert bzw. gekühlt werden, dass ihre Temperatur sowie die Temperatur des angrenzenden Epoxidharzes unterhalb der Grenztemperatur bleibt und es somit zu keiner signifikanten thermischen Schädigung des Epoxidharzes kommt.

Gemäß einer Ausführungsform kann das 1K-Epoxidharz dazu angepasst sein, bei einer Temperatur von wenigstens 200°C innerhalb von weniger als 1min, vorzugsweise weniger als 30 s, auszuhärten.

Anders ausgedrückt kann das 1K-Epoxidharz in seiner Zusammensetzung dahingehend optimiert sein, dass es einerseits verhältnismäßig hohen Prozesstemperaturen standhält und andererseits bei solch hohen Prozesstemperaturen sehr schnell aushärtet. Es wurde beispielsweise beobachtet, dass temperaturresistentes 1K-Epoxidharz bei einer Prozesstemperatur von 220 °C innerhalb von 30 Sekunden oder sogar innerhalb von nur 20 Sekunden vollständig oder weitestgehend aushärten kann.

Ein derart schnelles Aushärten des als Klebstoff verwendeten 1K-Epoxidharzes kann sehr vorteilhaft bei der industriellen Fertigung von graphitischen Bipolarplatten wirken, da der Klebstoff nicht nur schnell appliziert werden kann, sondern anschließend auch sehr schnell aushärten kann. Dies kann beispielsweise sehr hohe Taktraten beim Fertigen der Bipolarplatten ermöglichen.

Erfindungsgemäß ist das 1K-Epoxidharz dazu angepasst sein, eine Aktivierungstemperatur von wenigstens 50°C, vorzugsweise wenigstens 70 °C oder sogar wenigstens 90 °C, aufzuweisen.

Anders ausgedrückt kann die chemische Zusammensetzung des 1K-Epoxidharzes so gewählt werden, dass dessen Aktivierungstemperatur deutlich oberhalb typisch herrschender Umgebungstemperaturen beim Fertigen der Bipolarplatte ist. Die Höhe der Aktivierungstemperatur lässt sich hierbei beispielsweise durch eine Art des Härters bzw. der Härter, die hierbei eingesetzt werden, beeinflussen. Beispielsweise haben aromatische Amine mit hohem Schmelzpunkt typischerweise auch einen hohen Reaktionsonset. Weiterhin können latente Katalysatoren verwendet werden. In der Klasse der Imidazole ist hier beispielsweise eine Variation z.B. von 86°C bis 250°C möglich. Typischerweise in der Katalysator/Härter erst chemisch aktiv, wenn dieser in der geschmolzenen Phase vorliegt.

Dementsprechend kann das 1K-Epoxidharz bei den Umgebungstemperaturen sehr lange lagern, ohne dass eine Aushärtungsreaktion in signifikantem Maße abläuft. Mit anderen Worten kann die Topfzeit des 1K-Epoxidharzes sehr lange sein. Das 1K-Epoxidharz kann z.B. vorteilhaft über viele Stunden, Tage oder sogar Wochen hin verarbeitbar bleiben. Auch ein Verschmutzen oder gar Beschädigen von Werkzeugen, die beispielsweise beim Applizieren des Harzes eingesetzt werden, durch verbleibende, aushärtende Harzreste kann minimiert werden.

Gemäß einer Ausführungsform ist das 1K-Epoxidharz dazu angepasst, eine Glasumwandlungstemperatur von wenigstens 100°C, vorzugsweise wenigstens 110 °C oder sogar wenigstens 125 °C, aufzuweisen.

Die Glasumwandlungstemperatur wird teilweise auch als Glasübergangstemperatur bezeichnet und gibt diejenige Temperatur an, bei der ein festes Glas oder ein festes Polymer in einen gummiartigen bis zähflüssigen Zustand übergeht. Indem das für die Bipolarplatte eingesetzte 1K-Epoxidharz dazu angepasst wird, eine relativ hohe Glasumwandlungstemperatur aufzuweisen, kann erreicht werden, dass der die Monopolarplatten zusammenhaltende Klebstoff bei Temperaturen von typischerweise bis zu 90 °C, wie sie im Betrieb oft in Brennstoffzellen an Bipolarplatten auftreten können, stets ausreichend fest bleibt und nicht bereits gummiartig oder sogar zähflüssig wird. Somit kann erreicht werden, dass die verklebte Bipolarplatte bei normalen Betriebstemperaturen stets eine ausreichende Festigkeit behält. Die Höhe der Glasumwandlungstemperatur ist im Allgemeinen maßgeblich durch die Bindungsdichte sowie die Stärken der einzelnen Bindungen des ausreagierten Netzwerks bestimmt. Generell sind hier kurze und kleine Moleküle, mit vielen aktiven Bindungen, die zu einer hohen Bindungsstärke führen, zu bevorzugen. Aromaten mit mehreren funktionalen Gruppen führen daher meist zu einer hohen Glasumwandlungstemperatur Tg.

Gemäß einer Ausführungsform ist das 1K-Epoxidharz dazu angepasst, eine Topfzeit von wenigstens 5h und/oder eine Latenz von zwischen 0°C und 50°C aufzuweisen.

Latenz bedeutet hierbei, dass die Reaktion zwischen Harz und Härter vernachlässigbar langsam abläuft. Diese ist im Allgemeinen maßgeblich durch die Temperatur bestimmt. Die Latenz kann hierbei insbesondere durch die Wahl des Härters und Katalysators beeinflusst werden. Grob gesagt, je höher der Schmelzpunkt des Härters/Katalysators, desto latenter ist das System. Allerdings spielen hier auch die Stärken der Bindungskräfte der einzelnen Konstituenten rein. Öffnet sich eine reaktive Bindung leicht, dann ist das Molekül chemisch aktiver und reagiert schneller.

Gemäß einer Ausführungsform ist das 1K-Epoxidharz dazu angepasst, lokal begrenzt auf eine als Kontaktfläche dienende Oberfläche der Monopolarplatten aufgebracht werden zu können und dann standfest auf dieser Oberfläche zu verbleiben.

Mit anderen Worten ist das 1K-Epoxidharz dazu angepasst, eine derartige Fließfähigkeit bzw. Viskosität aufzuweisen, dass es auf die zu verklebende Oberfläche einer der Monopolarplatten lokal aufgebracht werden kann und anschließend nicht entlang der Monopolarplatte seitlich verfließt. Stattdessen soll das aufgebrachte Harz, solange außer der Gravitation keine weiteren Kräfte darauf ausgeübt werden, sich in seiner Form nicht verändern, d.h. standfest auf der Oberfläche verbleiben. Dementsprechend kann die Monopolarplatte mitsamt dem darauf lokal aufgebrachten Harz bewegt werden, ohne dass das Harz zwischenzeitlich verfließt. Insbesondere kann die Monopolarplatte beispielsweise von einer Apparatur, mit der das Harz lokal aufgebracht wird, hin zu einer Apparatur, mit der die Monopolarplatte mit einer weiteren Monopolarplatte zusammen gepresst wird, verlagert werden. Die Rheologie und/oder Standfestigkeit des 1K-Epoxidharzes lässt sich durch unterschiedliche Einflussfaktoren beeinflussen Zum Beispiel kann die Viskosität maßgeblich durch Füllstoffe (Thixotropiermittel) oder durch Verdünner beeinflusst werden. Diese Verdünner können reaktiv oder chemisch inert sein und weisen meist eine aliphatische und daher sehr bewegliche Kette auf. Damit wirken sie vergleichbar mit einem Schmiermittel, dass das Abgleiten aromatischer Bindungen begünstigt.

Insbesondere kann gemäß einer Ausführungsform das 1K-Epoxidharz dazu angepasst sein, strukturviskos zu sein.

Strukturviskosität, auch Scherentzähung genannt, ist die Eigenschaft eines Fluids, bei hohen Scherkräften eine abnehmende Viskosität zu zeigen. Bezogen auf das hierin beschriebene Epoxidharz bedeutet die strukturviskose Eigenschaft, dass das Harz eine hohe Viskosität aufweist, solange keine großen Scherkräfte darauf wirken und deshalb sehr standfest ist. Dementsprechend kann das Harz nach dem lokalen Auftragen auf die Monopolarplatte weitgehend kraftfrei bleiben und mit der Monopolarplatte verlagert werden, bis anschließend durch das Zusammenpressen der Monopolarplatte mit einer weiteren Monopolarplatte starke Scherkräfte auf das Harz ausgeübt werden. Aufgrund dieser starken Scherkräfte kann das Harz dann temporär dünnflüssiger werden, entlang der Oberflächen der Monopolarplatten fließen und sich dabei großflächiger zwischen den beiden Monopolarplatten verteilen.

Gemäß einer Ausführungsform kann das 1K-Epoxidharz mittels eines Dispensers als Raupe lokal begrenzt auf eine der Kontaktflächen der Monopolarplatten aufgebracht werden. Anschließend können die Monopolarplatten mit ihren einander gegenüberliegenden Kontaktflächen zusammengepresst werden.

Anders ausgedrückt kann das Harz mittels eines Dispensers lokal begrenzt in den Bereichen der Oberfläche einer Monopolarplatte aufgebracht werden, die mit der zweiten Monopolarplatte verklebt werden sollen. Der Dispenser kann hierbei ähnlich wie eine Spritzvorrichtung funktionieren, wobei das aufzubringende Harz aufgrund seiner vorzugsweise strukturviskosen Eigenschaft während des Spritzens relativ fließfähig ist und danach, ohne Kraftbeaufschlagung, standfest auf der Oberfläche verbleibt. Der Begriff "Dispenser" soll hierin jedoch breit ausgelegt werden und sich nicht auf eine Spritzvorrichtung beschränken, sondern jegliche Vorrichtung, insbesondere Druck- und/oder Auftragsvorrichtungen, umfassen, mithilfe derer viskose Fluide lokal, d.h. beispielsweise punkt- oder linienförmig oder flächig begrenzt, auf eine Oberfläche aufgebracht werden können.

Nachdem das Harz auf die Kontaktfläche einer oder beider Monopolarplatten appliziert wurde, können diese zusammengeführt und miteinander verpresst werden. Das Harz kann sich hierbei entlang der Kontaktflächen ausbreiten und eine starke Adhäsion mit diesen ausbilden.

Gemäß einer konkretisierten Ausführungsform können die Monopolarplatten mit ihren einander gegenüberliegenden Kontaktflächen derart ausgebildet sein und die Monopolarplatten derart zusammengepresst werden, dass sich zwischen den Kontaktflächen eine Spaltbreite von weniger als 200µm, vorzugsweise weniger als 150µm oder weniger als 100 µm oder sogar weniger als 60 µm, einstellt.

Mit anderen Worten können die beiden Monopolarplatten zumindest an ihren Kontaktflächen jeweils komplementär zueinander ausgebildet sein, sodass die Kontaktflächen, wenn die Monopolarplatten zueinander gepresst werden, sehr nahe beieinander zu liegen kommen. Ein orthogonaler Abstand zwischen den Kontaktflächen entspricht dabei der Spaltbreite und sollte möglichst gering sein. Eine Spaltbreite von weniger als 200µm führt dabei unter anderem dazu, dass sich nur ein geringes Volumen an Epoxidharz zwischen den beiden Monopolarplatten befinden kann und dieses Harz die Monopolarplatten großflächig kontaktiert. Beispielsweise kann eine pro Kontaktfläche vorhandene Masse an Epoxidharz hierbei unterhalb von 0,4g/m² bleiben. Dementsprechend kann Wärme, die in dem Harz während des Aushärtens erzeugt wird, großflächig und somit effizient an die Monopolarplatten übertragen und durch diese abgeleitet werden, sodass ein Auftreten übermäßiger Temperaturen vermieden werden kann.

Gemäß einer Ausführungsform kann das 1K-Epoxidharz frei von Füllkörpern mit Durchmessern von mehr als 50µm sein.

Herkömmliche 1K-Epoxidharze weisen oft Füllkörpern in Form kleiner Partikel oder Hohlkörper auf, mithilfe derer das Fließverhalten, die Viskosität und/oder das thermische Verhalten des Harzes beeinflusst werden können. Da bei der vorliegend beschriebenen Anwendung zum Verkleben von Monopolarplatten im Gegensatz zu herkömmlichen typischen Anwendungen von 1K-Epoxidharzen jedoch sehr enge Spaltbreiten angestrebt werden, ist es vorliegend zu bevorzugen, das Harz ohne Füllkörper oder allenfalls mit Füllkörpern geringen Durchmessers vorzusehen. Eventuell können Füllkörper eingesetzt werden, die eine Verformbarkeit aufweisen, insbesondere beim Verkleben der beiden Monopolarplatten und den dabei ausgeübten Kräften.

Gemäß einer Ausführungsform kann das 1K-Epoxidharz hinsichtlich einiger struktureller und/oder funktionaler Eigenschaften gezielt angepasst sein, um Bedingungen oder Erfordernissen, wie sie bei der Anwendung in Bipolarplatten in Brennstoffzellen oder Flussbatterien zu berücksichtigen sind, Rechnung zu tragen. Insbesondere kann das 1K-Epoxidharz im Wesentlichen frei von Katalysatorgiften betreffend in der Brennstoffzelle einzusetzenden Katalysatoren sein. Alternativ oder ergänzend kann das 1K-Epoxidharz im Wesentlichen frei von Substanzen sein, welche eine Korrosion von in der Brennstoffzelle einzusetzenden Materialien oder eine Membrandegradation fördern. Alternativ oder ergänzend kann das 1K-Epoxidharz im Wesentlichen frei von Substanzen sein, welche eine Protonenleitfähigkeit in der Brennstoffzelle mindern. Alternativ oder ergänzend kann das 1K-Epoxidharz eine Sauerstoffdurchlässigkeit von minimal 0,003mol/s bei einer Diffusionsdistanz von größer 1,5mm und einer Temperatur in einem Bereich von 25°C bis 90°C aufweisen. Alternativ oder ergänzend kann das 1K-Epoxidharz beständig gegenüber 0,5mM-Schwefelsäure, Glysantin und VE-Wasser bei 95°C über 1000h sein.

In Brennstoffzellen bzw. Flussbatterien werden meist Katalysatoren eingesetzt, um dort auftretende chemische Reaktionen zu unterstützen. Solche Katalysatoren können jedoch von bestimmten anderen Substanzen, die als Katalysatorgifte bezeichnet werden, in ihrer Wirkung gehemmt werden. Daher kann es wichtig sein, in der gesamten Brennstoffzelle bzw. Flussbatterie einschließlich ihrer Bipolarplatten dafür zu sorgen, dass keinerlei signifikante Mengen an Katalysatorgiften in Umlauf kommen. Unter "im Wesentlichen frei von Katalysatorgiften" bzw. "signifikanten Mengen an Katalysatorgiften" kann hierbei verstanden werden, dass eine etwaige Menge von Katalysatorgiften innerhalb des 1K-Epoxidharzes allenfalls so groß ist, dass die Katalysatorgifte die Funktion der Brennstoffzelle bzw. Flussbatterie nicht wesentlich negativ beeinflussen. Als Katalysatorgifte können in Brennstoffzellen oder Flussbatterien organische Materialien wie zum Beispiel freie Siloxane, Phthalate, Amide oder ähnliche Stoffe wirken. Ihr Anteil sollte in dem 1K-Epoxidharz möglichst jeweils geringer als 50 ppm, vorzugsweise geringer als 30 ppm, sein. Ein gesamter Anteil von semi-volatilen organischen Materialien sollte vorzugsweise geringer als 300 ppm, stärker bevorzugt geringer als 100 ppm, sein. Ein Anteil volatiler und/oder entflammbarer organischer Materialien wie zum Beispiel Alkohole sollte vorzugsweise geringer als 10 ppm, stärker bevorzugt geringer als 5 ppm sein. Gemessen werden können solche Anteile beispielsweise mit Messmethoden wie Gas Chromatographie/Massenspektrometrie (GC/MS) mittels DCM/Methanol Extraktion (MSQS), EPA 8270D, TBC. Auch an Anionen wie zum Beispiel Chloride können als Katalysatorgifte wirken. Ihr Anteil sollte vorzugsweise geringer als 10 ppm, stärker bevorzugt geringer als 5 ppm sein, gemessen zum Beispiel mit Messmethoden wie APHA 4110 B, Ionenchromatographie mit chemischer Suppression der Extraktionsmittel-Leitfähigkeit (englisch: Chemical Suppression of Eluent Conductivity), NIOSH 6011, APHA 4110B.

Ferner sollte in einer Brennstoffzelle bzw. einer Flussbatterie verhindert werden, dass sich deren Eigenschaften durch Korrosion oder Degradation von darin vorgesehenen Membranen mit der Zeit verschlechtern. Daher sollte auch bei dem 1K-Epoxidharz darauf geachtet werden, dass dieser keine Substanzen enthält, die diesbezüglich negativ wirken. Beispielweise sollte auf sogenannte Fenton-Metalle so weit wie möglich verzichtet werden. Solche Substanzen umfassen beispielsweise Eisen, Kupfer, Chrom, Nickel und Titan. Deren Anteile in dem Harz sollten jeweils möglichst kleiner als 30 ppm, stärker bevorzugt kleiner als 10 ppm bleiben, gemessen beispielsweise mit Messverfahren wie ICP/AES, EPA 3050B.

Auch eine Protonenleitfähigkeit sollte in einer Brennstoffzelle hoch bleiben. Dementsprechend sollten in dem 1K-Epoxidharz möglichst wenige Substanzen in möglichst geringen Mengen enthalten sein, die eine solche Protonenleitfähigkeit senken.

Solche Substanzen umfassen unter anderem Aluminium, Arsen, Barium, Wismut, Kadmium, Kobalt, Lithium, Magnesium, Mangan, Molybdän, Blei, Antimon, Selen, Zinn, Vanadium, Zink, Zirkon, Kalzium, Natrium und Schwefel. Bis auf die drei letztgenannten Substanzen sollte jede dieser Substanzen möglichst mit einem Anteil von höchstens 30 ppm, vorzugsweise höchstens 10 ppm in dem Harz vorhanden sein, wobei ein Gesamtanteil aller dieser Substanzen möglichst unter 300 ppm, vorzugsweise unter 100 ppm bleiben sollte, gemessen beispielsweise mit ICP/AES, EPA 3050B. Für die drei letztgenannten Substanzen sollte ein Anteil vorzugsweise jeweils unter 300 ppm, stärker bevorzugt unter 100 ppm bleiben, gemessen beispielsweise mit PRC 7100207, EPA 3050B.

Da innerhalb einer Brennstoffzelle bzw. Flussbatterie Sauerstoff für verschiedene chemische Reaktionen benötigt wird und Sauerstoff unter anderem auch durch die Bipolarplatte zirkuliert werden muss, sollte auch eine Sauerstoffdurchlässigkeit des 1K-Epoxidharzes ausreichend niedrig sein, um eine solche Zirkulation nicht zu stören. Insbesondere sollte der Sauerstoff nicht oder allenfalls vernachlässigbar durch eine als Dichtung wirkende, von dem Epoxidharz erzeugte Verklebung in hindurch treten können. Das 1K-Epoxidharz sollte hinsichtlich seiner Eigenschaften daher dazu angepasst sein, weitgehend gasdicht zu sein, insbesondere hinsichtlich eines Durchtrittes von Sauerstoff. Hierzu sollte die Sauerstoffdurchlässigkeit innerhalb des Epoxidharzes über eine Distanz von beispielsweise größer 1,5mm kleiner als 0,006mol/s, vorzugsweise kleiner als 0,003mol/s sein. Dies sollte in einem Temperaturbereich, in dem die Brennstoffzelle bzw. Flussbatterie typischerweise betrieben wird, d.h. beispielsweise zwischen 25 °C und 90 °C, gelten.

Ferner kann das 1K-Epoxidharz innerhalb der Brennstoffzelle bzw. Flussbatterie mit dort typischerweise vorhandenen Chemikalien wie Schwefelsäure, Glysantin und VE-Wasser in Kontakt kommen und sollte daher bei typischen Betriebstemperaturen über eine ausreichend lange Dauer von beispielsweise wenigstens 500 Stunden oder sogar wenigstens 1000 Stunden hin beständig sein.

Ausführungsformen der Bipolarplatte gemäß dem zweiten Aspekt der Erfindung können mithilfe von Ausführungsformen des hierin beschriebenen Fertigungsverfahrens hergestellt werden. Dementsprechend kann der zwischen ihren Monopolarplatten zur Verklebung eingesetzte 1K-Epoxidharz-Klebstoff die Eigenschaften aufweisen, wie sie vorangehend im Rahmen der Beschreibung des Verfahrens geschildert wurden.

Eine Energiespeicheranordnung gemäß dem dritten Aspekt der Erfindung kann eine oder mehrere der hierin beschriebenen Bipolarplatten umfassen. Bipolarplatten können zu einem Stapel geschichtet sein. Neben den Bipolarplatten können weitere Komponenten wie beispielsweise Elektroden, Membranen, etc. und/oder weitere Substanzen wie beispielsweise Elektrolyte in der Energiespeicheranordnung aufgenommen sein.

Es wird darauf hingewiesen, dass hierin mögliche Merkmale und Vorteile von Ausführungsformen der Erfindung teils mit Bezug generell auf ein Verfahren zum Fertigen einer Bipolarplatte und teils mit Bezug auf eine verfahrensgemäß gefertigte Bipolarplatte sowie das dabei zum Einsatz kommende 1K-Epoxidharz beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine Draufsicht auf eine Monopolarplatte während eines Verfahrens gemäß einer Ausführungsform der vorliegenden Erfindung.
Figur 2 zeigt eine Schnittansicht einer Monopolarplatte während eines Verfahrens gemäß einer Ausführungsform der vorliegenden Erfindung.
Figur 3 zeigt eine weitere Schnittansicht einer Monopolarplatte während eines Verfahrens gemäß einer Ausführungsform der vorliegenden Erfindung.
Figur 4 zeigt eine Energiespeicheranordnung mit einer Brennstoffzelle gemäß einer Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

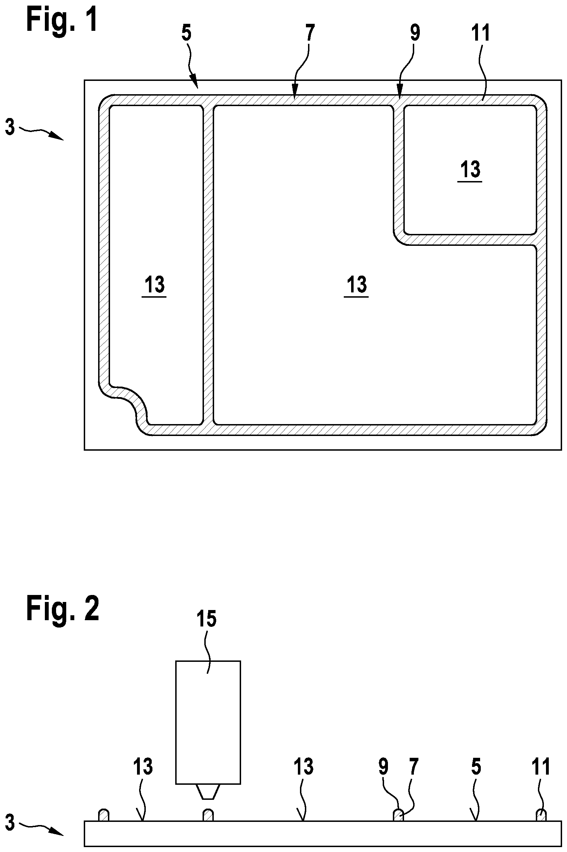

Figur 1 zeigt eine stark schematisierte Draufsicht auf eine Oberfläche 5 einer Monopolarplatte 3, mithilfe derer eine Bipolarplatte für eine Brennstoffzelle hergestellt werden soll. Die Oberfläche 5 ist bei der fertigen Bipolarplatte zu einer gegenüberliegenden weiteren Monopolarplatte ähnlicher oder gleicher Geometrie gerichtet. An der Oberfläche 5 befinden sich mehrere Areale 13. Innerhalb dieser Areale 13 sind an der Oberfläche 5 jeweils kanalartige Strukturen beispielsweise in Form von Vertiefungen (aus Übersichtlichkeitsgründen nicht dargestellt) vorgesehen, die sich entlang der Oberfläche 5 erstrecken. Entlang eines Außenumfangs der Areale 13 bzw. zwischen benachbarten Arealen 13 verläuft jeweils eine schmale linienartiger Kontaktfläche 7. Jedes Areal 13 ist vollständige ringförmig von einem Bereich dieser Kontaktfläche 7 umgeben.

Wie im Querschnitt in Figur 2 dargestellt, wird während eines Verfahrens, bei dem die Bipolarplatte 1 hergestellt wird, zunächst mithilfe eines Dispensers 15 ein 1K-Epoxidharz 9 entlang der Kontaktfläche 7 auf die Oberfläche 5 der Monopolarplatte 3 aufgebracht. Der Dispenser 15 kann hierbei ähnlich wie eine Spritzvorrichtung ausgebildet sein und das 1K-Epoxidharz 9 in Form einer Raupe 11 sukzessive entlang der Kontaktfläche 7 aufbringen, indem der Dispenser 15 und die Monopolarplatte 3 relativ zueinander in Richtungen parallel zu der Oberfläche 5 der Monopolarplatte 3 bewegt werden. Da das 1K-Epoxidharz 9 relativ zäh und vorzugsweise strukturviskos ist, kann die Raupe 11 mit einer begrenzten Breite von beispielsweise wenigen Millimetern und einem hohen Aspektverhältnis (Verhältnis von Höhe zu Breite) von beispielsweise mehr als 0,5 aufgebracht werden . Das 1K-Epoxidharz 9 ist hierbei vorzugsweise ausreichend standfest, sodass die Raupe 11 aus 1K-Epoxidharz 9 nach dem Auftragen nicht seitlich entlang der Oberfläche 5 der Monopolarplatte 3 verfließt, sondern ihre Form und insbesondere ihre Breite beibehält.

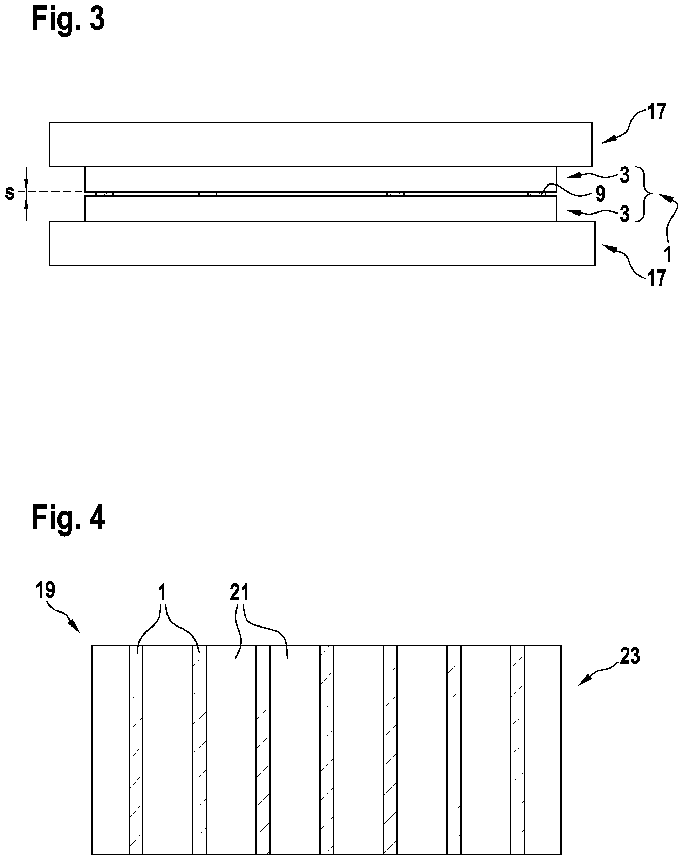

Anschließend wird, wie in Figur 3 veranschaulicht, die mit dem Epoxidharz 9 versehene Monopolarplatte 3 mit einer weiteren Monopolarplatte 3 zusammengestapelt. Der Stapel wird dann in eine Pressheizvorrichtung 17 eingebracht. Dort wird von beiden Seiten her Druck auf die gestapelten Monopolarplatten 3 ausgeübt und diese somit miteinander verpresst. Aufgrund der hierbei ausgeübten Kräfte und insbesondere hierdurch bewirkter Scherkräfte fließt das strukturviskose 1K-Epoxidharz hierbei entlang der Oberfläche 5, d.h. eine Breite der von Harz bedeckten Kontaktfläche 7 nimmt zu und gleichzeitig sinkt die Höhe der Harzschicht. Vorzugsweise werden dabei die beiden Monopolarplatten 3 so weit zueinander gepresst, dass eine verbleibende Spaltbreite s weniger als 150 µm, beispielsweise nur 50 µm oder weniger, beträgt.

Gleichzeitig oder anschließend wird die Pressheizvorrichtung 17 dazu eingesetzt, die beiden Monopolarplatten 3 auf eine erhöhte Temperatur von beispielsweise 200 °C oder mehr zu erhitzen. Bei einer Temperatur von typischerweise zwischen 90 °C und 130 °C erreicht das in diesem Fall eingesetzte 1K-Epoxidharz seine Aktivierungstemperatur, sodass darin exotherme Aushärtreaktionen beginnen abzulaufen. Die dabei freigesetzte thermische Energie unterstützt den Aufheizvorgang. Allerdings ist die Pressheizvorrichtung 17 derart konzipiert und wird derart betrieben, dass sie beispielsweise aufgrund ihrer thermischen Eigenschaften und/oder sogar aufgrund einer aktiven Temperaturregelung dafür sorgt, dass die Monopolarplatten 3 und insbesondere das zwischen diesen befindliche 1K-Epoxidharz 9 nicht zu heiß wird, d.h. insbesondere nicht heißer als eine Grenztemperatur, oberhalb derer das 1K-Epoxidharz Schaden nehmen kann. Die thermischen Eigenschaften der Pressheizvorrichtung 17 umfassen hierbei beispielsweise deren thermische Trägheit, Wärmekapazität, Wärmeleitfähigkeit, etc. Die Pressheizvorrichtung 17 kann neben einer Heizanordnung eventuell auch eine Kühlanordnung und/oder Sensorik umfassen, um ihr thermisches Verhalten aktiv steuern oder regeln zu können. Aufgrund der typischerweise sehr hohen thermischen Leitfähigkeit der graphitischen Monopolarplatten 3 kann dabei Wärmeenergie, die während der Aushärtung in dem 1K-Epoxidharz 9 frei wird, sehr effizient abgeleitet werden und somit einer Überhitzung vorgebeugt werden.

Nach dem Aushärten sorgt das 1K-Epoxidharz 9 einerseits für eine mechanisch sehr belastbare Verklebung der beiden Monopolarplatten 3. Andererseits wird durch das 1K-Epoxidharz 9 jeweils eine Art Dichtung um jedes der Areale 13 herum gebildet.

Das für den hierin beschriebenen Einsatzzweck der Fertigung von graphitischen Bipolarplatten 1 eingesetzte 1K-Epoxidharz 9 ist hinsichtlich seiner Eigenschaften auf vielfältige Weise speziell an den Einsatzzweck angepasst. Beispielsweise soll das 1K-Epoxidharz 9 hohen Temperaturen von wenigstens 200 °C schädigungsfrei standhalten und bei solch hohen Prozesstemperaturen sehr schnell, beispielsweise innerhalb von 30 Sekunden oder weniger, aushärten. Ein derart beschleunigter Aushärtvorgang ermöglicht eine sehr schnelle Fertigung, d.h. hohe Taktraten, bei der Produktion von Bipolarplatten 1. Außerdem soll das 1K-Epoxidharz 9 eine verhältnismäßig hohe Aktivierungstemperatur von beispielsweise mehr als 90 °C aufweisen, sodass es bei normalen Umgebungstemperaturen sehr lange, d.h. beispielsweise über mehr als 2 Wochen, gelagert und verarbeitet werden kann. Ferner soll das 1K-Epoxidharz 9 eine verhältnismäßig hohe Glasumwandlungstemperatur von beispielsweise mehr als 120 °C aufweisen, sodass es bei den typischen Betriebstemperaturen innerhalb einer Brennstoffzelle fest und stabil bleibt.

Es wird darauf hingewiesen, dass Einflussmöglichkeiten, mit denen Eigenschaften von Klebstoffen, insbesondere von 1K-Epoxyharzen, gezielt manipuliert werden können, weitgehend bekannt sind und das Fachleute im Allgemeinen in der Lage sind, einen für einen Anwendungsfall geeignet angepassten Klebstoff zusammen zu mischen, sofern ihnen die für den Anwendungsfall geltenden Rand- und Zielbedingungen bekannt sind. Fachleute verfügen hierbei über ein umfangreiches Hintergrundwissen wie es beispielsweise in dem Lehrbuch von Edward M. Petrie: "Epoxy Adhesive Formulations", Verlag McGraw Hill Professional, 2005, ISBN 0071589082, 9780071589086 sowie dem Lehrbuch von Sina Ebnesajjad: "Handbook of Adhesives and Surface Preparation: Technology, Applications and Manufacturing", Plastics Design Library, Verlag William Andrew, 2010, ISBN 1437744621, 9781437744620 beschrieben ist.

Lediglich als eine von vielen Möglichkeiten wird nachfolgend eine Zusammensetzung eines 1K-Epoxidharzes dargelegt, welches bei dem hierin beschriebenen Fertigungsverfahren eingesetzt werden kann. Das beispielhafte Epoxidharz besteht zu 50 - 60% aus Harzbestandteilen und zu 40 - 50% aus Füllstoffen. Die Harzbestandteile können hierbei wie folgt zusammengesetzt sein:
- 10-30% Epichlorhydrinharz mit einer durchschnittlichen Molekulargewichtsverteilung von höchstens 700 (d.h. average MW <= 700)
- 10-30% Formaldehyd, oligomerisches Reaktionsprodukt mit 1-Chloro, 2,3-Epoxypropan und Phenol
- 5-10% 4,4'-Isopropylidenediphenol, oligomerisches Reaktionsprodukt mit 1-Chloro-2,3-Epoxypropan
- 1-5% 4,4'-Isopropylidenediphenol, oligomerisches Reaktionsprodukt mit 1-Chloro-2,3-Epoxypropan, Reaktionsprodukt mit [(Demethyl-Amino)Methyl]Phenol und Piperazine

Die Füllstoffe können aus 95-100% Magnesium-Silikat und 0-5% anderen Metalloxiden zusammengesetzt sein.

Die in der hier beschriebenen Weise gefertigte Bipolarplatte 1 kann beispielsweise in einer Brennstoffzelle 21 in einer Energiespeicheranordnung 19 verwendet werden, wie sie grob schematisch in Fig. 4 dargestellt ist. In einem Zellenstapel eines als Energiespeicheranordnung 19 dienenden Brennstoffzellensystems 23 können dabei benachbarte Brennstoffzellen 21 mithilfe von Bipolarplatten 1 voneinander getrennt, elektrisch miteinander verbunden und mit Brennstoff versorgt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, innerhalb des Schutzumfangs der Ansprüche. Bezugszeichen in den Ansprüchen sind nicht als Einschränkung anzusehen.

### Bezugszeichenliste

- 1: Bipolarplatte
- 3: Monopolarplatte
- 5: Oberfläche der Monopolarplatte
- 7: Kontaktfläche der Monopolarplatte
- 9: 1K-Epoxidharz
- 11: Raupe
- 13: Areal
- 15: Dispenser
- 17: Pressheizvorrichtung
- 19: Energiespeicheranordnung
- 21: Brennstoffzelle
- 23: Brennstoffzellensystems

- s: Spaltbreite zwischen Monopolarplatten

## Patentansprüche

1. Verfahren zum Fertigen einer graphitischen Bipolarplatte (1) für eine Brennstoffzelle (21) oder eine Flussbatterie, umfassend:
Bereitstellen eines Paars von graphitischen Monopolarplatten (3), und
Verkleben der Monopolarplatten (3) entlang einander gegenüberliegender Kontaktflächen (7) der Monopolarplatten (3),
**dadurch gekennzeichnet, dass**
zum Verkleben ein 1K-Epoxidharz (9) eingesetzt wird, und
das 1K-Epoxidharz (9) dazu angepasst ist, eine Aktivierungstemperatur von wenigstens 50°C aufzuweisen, indem als Härter aromatische Amine, welche als Feststoffhärter fungieren, eingesetzt werden.

2. Verfahren nach Anspruch 1,
wobei das 1K-Epoxidharz (9) dazu angepasst ist, Temperaturen bis zu einer Grenztemperatur von wenigstens 200°C schädigungsfrei standzuhalten, und
wobei das 1K-Epoxidharz (9) während des Verklebens auf wenigstens 200°C erhitzt wird.

3. Verfahren nach Anspruch 2,
wobei die Monopolarplatten (3) während des Verklebens auf eine Temperatur unterhalb der Grenztemperatur des 1K-Epoxidharzes (9) temperiert werden.

4. Verfahren nach Anspruch 2,
wobei das 1K-Epoxidharz (9) dazu angepasst ist, bei einer Temperatur von wenigstens 200°C innerhalb von weniger als 1min auszuhärten.

5. Verfahren nach einem der vorhergehenden Ansprüche,
wobei in dem 1K-Epoxidharz (9) ein Härter und/oder ein Katalysator aufgenommen sind, welche erst chemisch aktiv werden, wenn sie durch Erwärmen über die Aktivierungstemperatur in einer geschmolzenen Phase vorliegen.

6. Verfahren nach einem der vorhergehenden Ansprüche,
wobei das 1K-Epoxidharz (9) dazu angepasst ist, eine Glasumwandlungstemperatur von wenigstens 100°C aufzuweisen.

7. Verfahren nach einem der vorhergehenden Ansprüche,
wobei das 1K-Epoxidharz (9) dazu angepasst ist, eine Topfzeit von wenigstens 5h und/oder eine Latenz von zwischen 0°C und 50°C aufzuweisen.

8. Verfahren nach einem der vorhergehenden Ansprüche,
wobei das 1K-Epoxidharz (9) dazu angepasst ist, lokal begrenzt auf eine als Kontaktfläche (7) dienende Oberfläche (5) der Monopolarplatten (3) aufgebracht werden zu können und dann standfest auf dieser Oberfläche (5) zu verbleiben.

9. Verfahren nach einem der vorhergehenden Ansprüche,
wobei das 1K-Epoxidharz (9) dazu angepasst ist, strukturviskos zu sein.

10. Verfahren nach einem der vorhergehenden Ansprüche,
wobei das 1K-Epoxidharz (9) mittels eines Dispensers (15) als Raupe (11) lokal begrenzt auf eine der Kontaktflächen (7) der Monopolarplatten (3) aufgebracht wird und die Monopolarplatten (3) dann mit ihren einander gegenüberliegenden Kontaktflächen (7) zusammengepresst werden.

11. Verfahren nach Anspruch 10,
wobei die Monopolarplatten (3) mit ihren einander gegenüberliegenden Kontaktflächen (7) derart ausgebildet sind und die Monopolarplatten (3) derart zusammengepresst werden, dass sich zwischen den Kontaktflächen (7) eine Spaltbreite (s) von weniger als 200µm einstellt.

12. Verfahren nach einem der vorhergehenden Ansprüche,
wobei das 1K-Epoxidharz (9) frei von Füllkörpern mit Durchmessern von mehr als 50µm ist.

13. Verfahren nach einem der vorhergehenden Ansprüche,
wobei das 1K-Epoxidharz (9) im Wesentlichen frei von Katalysatorgiften betreffend in der Brennstoffzelle (21) oder Flussbatterie einzusetzenden Katalysatoren ist, und/oder wobei das 1K-Epoxidharz (9) im Wesentlichen frei von Substanzen ist, welche eine Korrosion von in der Brennstoffzelle (21) bzw. Flussbatterie einzusetzenden Materialien oder eine Membrandegradation fördern,
wobei das 1K-Epoxidharz (9) im Wesentlichen frei von Substanzen ist, welche eine Protonenleitfähigkeit in der Brennstoffzelle (21) bzw. Flussbatterie mindern, und/oder wobei das 1K-Epoxidharz (9) eine Sauerstoffdurchlässigkeit von wenigstens 0,003mol/s bei einer Diffusionsdistanz von größer 1,5mm und einer Temperatur in einem Bereich von 25°C bis 90°C aufweist, und/oder
wobei das 1K-Epoxidharz (9) beständig gegenüber 0,5mM-Schwefelsäure, Glysantin und VE-Wasser bei 90°C über wenigstens 500h ist.

14. Bipolarplatte (1) für eine Brennstoffzelle (21) oder eine Flussbatterie, aufweisend:
ein Paar von graphitischen Monopolarplatten (3),
durch gekennzeichnet, dass die Monopolarplatten (3) mittels eines 1K-Epoxidharzes (9) entlang einander gegenüberliegender Kontaktflächen (7) miteinander verklebt sind,
wobei das 1K-Epoxidharz (9) dazu angepasst ist, eine Aktivierungstemperatur von wenigstens 50°C aufzuweisen, indem als Härter aromatische Amine, welche als Feststoffhärter fungieren, eingesetzt werden.

15. Energiespeicheranordnung (19), insbesondere mit wenigstens einer Brennstoffzelle (21) oder Flussbatterie, mit einer Bipolarplatte (1) gemäß Anspruch 14.

## Claims

1. Method of manufacturing a graphite bipolar plate (1) for a fuel cell (21) or flow battery, comprising:
providing a pair of graphite monopolar plates (3) and
bonding the monopolar plates (3) along opposing contact faces (7) of the monopolar plates (3),
**characterised in that**
a 1C epoxy resin (9) is used for bonding, and
the 1C epoxy resin is adapted to have an activation temperature of at least 50°C by using aromatic amines, which act as solid hardeners, as hardeners.

2. Method according to claim 1,
wherein the 1C epoxy resin (9) is adapted to withstand temperatures up to a limit temperature of at least 200°C without damage, and
wherein the 1C epoxy resin (9) is heated to at least 200°C during bonding.

3. Method according to claim 2,
wherein the monopolar plates (3) are tempered during bonding to a temperature below the limit temperature of the 1C epoxy resin (9).

4. Method according to claim 2,
wherein the 1C epoxy resin (9) is adapted to cure at a temperature of at least 200°C within less than 1 minute.

5. Method according to any of the preceding claims,
wherein the 1C epoxy resin includes a hardener and/or a catalyst which become chemically active only upon being in a molten phase due to being heated beyond the activation temperature.

6. Method according to any of the preceding claims,
wherein the 1C epoxy resin (9) is adapted to have a glass transition temperature of at least 100°C.

7. Method according to any of the preceding claims,
wherein the 1C epoxy resin (9) is adapted to have a pot life of at least 5 hours and/or a latency of between 0°C and 50°C.

8. Method according to any of the preceding claims,
wherein the 1C epoxy resin (9) is adapted to be applied locally to a surface (5) of the monopolar plates (3) serving as a contact face (7) and then to remain self-supportingly stable on this surface (5).

9. Method according to any of the preceding claims,
wherein the 1C epoxy resin (9) is adapted to be structurally viscous.

10. Method according to any of the preceding claims,
wherein the 1C epoxy resin (9) is applied by means of a dispenser (15) as a bead (11) locally confined to one of the contact faces (7) of the monopolar plates (3) and the monopolar plates (3) are then pressed together with their opposing contact faces (7).

11. Method according to claim 10,
wherein the monopolar plates (3) are formed with their opposing contact faces (7) in such a way and the monopolar plates (3) are pressed together in such a way that a gap width (s) of less than 200 µm is obtained between the contact faces (7).

12. Method according to any of the preceding claims,
wherein the 1C epoxy resin (9) is free of fillers with diameters greater than 50µm.

13. Method according to any of the preceding claims,
wherein the 1C epoxy resin (9) is substantially free of catalyst poisons affecting catalysts used in the fuel cell (21) or flow battery, and/or
wherein the 1C epoxy resin (9) is substantially free of substances that promote corrosion of materials used in the fuel cell (21) or flow battery or that promote membrane degradation, and/or
wherein the 1C epoxy resin (9) is substantially free of substances that reduce proton conductivity in the fuel cell (21) or flow battery, and/or
wherein the 1C epoxy resin (9) has an oxygen permeability of at least 0.003mol/s at a diffusion distance greater than 1.5mm and at a temperature in a range of 25°C to 90°C, and/or
wherein the 1C epoxy resin (9) is resistant to 0.5mM sulphuric acid, glysantin and deionised water at 90°C for at least 500 hours.

14. Bipolar plate (1) for a fuel cell (21) or flow battery, comprising:
a pair of graphite monopolar plates (3),
**characterised in that**
the monopolar plates (3) are bonded together by means of a 1C epoxy resin (9) along opposing contact faces (7),
wherein the 1C epoxy resin is adapted to have an activation temperature of at least 50°C by using aromatic amines, which act as solid hardeners, as hardeners.

15. Energy storage assembly (19), in particular with at least one fuel cell (21) or flow battery, with a bipolar plate (1) according to claim 14.

## Revendications

1. Procédé de fabrication d'une plaque bipolaire graphitique (1) pour une pile à combustible (21) ou une batterie à flux redox, comprenant de :
fournir une paire de plaques monopolaires graphitiques (3), et
coller les plaques monopolaires (3) le long de surfaces de contact (7) des plaques monopolaires (3) mutuellement opposées,
**caractérisé en ce que**
une résine époxyde à un composant, 1K, (9) est utilisée pour le collage, et
la résine époxyde 1K (9) est adaptée pour avoir une température d'activation d'au moins 50 °C en utilisant, en tant que durcisseur, des amines aromatiques qui font fonction de durcisseurs solides.

2. Procédé selon la revendication 1,
dans lequel la résine époxyde 1K (9) est adaptée pour résister sans dommage à des températures allant jusqu'à une température limite d'au moins 200 °C, et
dans lequel la résine époxyde 1K (9) est chauffée à au moins 200 °C pendant le collage.

3. Procédé selon la revendication 2,
dans lequel les plaques monopolaires (3) sont tempérées pendant le collage à une température inférieure à la température limite de la résine époxyde 1K (9).

4. Procédé selon la revendication 2,
dans lequel la résine époxyde 1K (9) est adaptée pour durcir à une température d'au moins 200 °C en moins de 1 min.

5. Procédé selon l'une des revendications précédentes, dans lequel un durcisseur et/ou un catalyseur sont incorporés dans la résine époxyde 1K (9), lesquels durcisseur et/ou catalyseur ne deviennent chimiquement actifs que lorsqu'ils sont présents en phase fondue en les chauffant au-dessus de la température d'activation.

6. Procédé selon l'une des revendications précédentes, dans lequel la résine époxyde 1K (9) est adaptée pour avoir une température de transition vitreuse d'au moins 100 °C.

7. Procédé selon l'une des revendications précédentes, dans lequel la résine époxyde 1K (9) est adaptée pour avoir une durée de vie en pot d'au moins 5 h et/ou une latence comprise entre 0 °C et 50 °C.

8. Procédé selon l'une des revendications précédentes, dans lequel la résine époxyde 1K (9) est adaptée pour pouvoir être appliquée de façon localement limitée sur une surface (5) des plaques monopolaires (3) servant de surface de contact (7), et pour rester ensuite stable sur cette surface (5).

9. Procédé selon l'une des revendications précédentes, dans lequel la résine époxyde 1K (9) est adaptée pour avoir une viscosité rhéofluidifiant.

10. Procédé selon l'une des revendications précédentes, dans lequel la résine époxyde 1K (9) est appliquée au moyen d'un distributeur (15) sous forme de cordon (11), de façon localement limitée sur l'une des surfaces de contact (7) des plaques monopolaires (3) et les plaques monopolaires (3) sont ensuite comprimées avec leurs surfaces de contact (7) mutuellement opposées.

11. Procédé selon la revendication 10,
dans lequel les plaques monopolaires (3) sont formées avec leurs surfaces de contact (7) mutuellement opposées et les plaques monopolaires (3) sont comprimées de telle sorte qu'une largeur d'interstice (s) inférieure à 200 um est créée entre les surfaces de contact (7).

12. Procédé selon l'une des revendications précédentes, dans lequel la résine époxyde 1K (9) est exempte de charges ayant des diamètres supérieurs à 50 um.

13. Procédé selon l'une des revendications précédentes, dans lequel la résine époxyde 1K (9) est sensiblement exempte de poisons catalytiques concernant des catalyseurs à utiliser dans la pile à combustible (21) ou la batterie à flux redox, et/ou
dans lequel la résine époxyde 1K (9) est sensiblement exempte de substances qui favorisent une corrosion des matériaux à utiliser dans la pile à combustible (21) ou la batterie à flux redox, ou une dégradation de membrane, dans lequel la résine époxyde 1K (9) est sensiblement exempte de substances qui réduisent une conductivité protonique dans la pile à combustible (21) ou la batterie à flux redox, et/ou
dans lequel la résine époxyde 1K (9) a une perméabilité à l'oxygène d'au moins 0,003 mol/s à une distance de diffusion supérieure à 1,5 mm et à une température dans une plage de 25 °C à 90 °C, et/ou
dans lequel la résine époxyde 1K (9) est résistante à l'acide sulfurique 0,5 mM, au glysantin et à l'eau déminéralisée (VE) à 90 °C pendant au moins 500 h.

14. Plaque bipolaire (1) pour une pile à combustible (21) ou une batterie à flux redox, comportant :
une paire de plaques monopolaires graphitiques (3),
**caractérisée en ce que** les plaques monopolaires (3) sont collées l'une à l'autre au moyen d'une résine époxyde 1K (9) le long de surfaces de contact (7) mutuellement opposées,
dans laquelle la résine époxyde 1K (9) est adaptée pour avoir une température d'activation d'au moins 50 °C, en utilisant, en tant que durcisseur, des amines aromatiques qui font fonction de durcisseurs solides.

15. Ensemble d'accumulateur d'énergie (19), ayant en particulier au moins une pile à combustible (21) ou une batterie à flux redox, comportant une plaque bipolaire (1) selon la revendication 14.
